# EUROPÄISCHE PATENTSCHRIFT

(11) **EP 1 211 360 B1**
(45) Veröffentlichungstag und Bekanntmachung des Hinweises auf die Patenterteilung: **06.04.2005**
(21) Anmeldenummer: 01128210.0
(22) Anmeldetag: 28.11.2001
(51) Int. Cl.: E03B 3/02, E03F 5/14

(54) **Vorrichtung zum Reinigen eines Mehrphasen-Gemisches von insbesondere Dachablauf- und/oder Zisternen-Rohwasser**
Device for the cleaning of a multi-phase liquid, particularly of roof rain water and/or water-butt water
Dispositif de nettoyage d'un liquide multiphasique, en particulier de l'eau de pluie provenant d'une toiture et/ou d'une citerne

(30) Priorität: 29.11.2000 DE 10059305
(43) Veröffentlichungstag der Anmeldung: 05.06.2002
(73) Patentinhaber: Jensen, Jürgen, Prof.Dr.-Ing., 57250 Netphen (DE)
(72) Erfinder: Jensen, Jürgen, Prof.Dr.-Ing., 57250 Netphen (DE); Braxein, Axel, Dr.-Ing., 4721 Kelmis (BE); Mäueler, Jens, cand. Ing., 57076 Siegen (DE)
(74) Vertreter: Valentin, Ekkehard, Dipl.-Ing.

(56) Entgegenhaltungen:
- EP-A- 0 995 856
- DE-A- 4 237 201
- DE-A- 19 650 023
- DE-C- 4 243 564

## Beschreibung

Die Erfindung betrifft eine Vorrichtung zum Reinigen eines Mehrphasen-Gemisches von insbesondere Dachablauf- und/oder Zisternen-Rohwasser zur mindestens teilweisen Alimentation von Brauchwasser-Verbrauchern speziell im Wohnbereich wie Toilettenspülung, Haus- und Hofreinigung, Gartenbewässerung, Autowäsche und dergleichen, mit einem Rohwasser-Zulauf, einem Durchlauffilter und einem Brauchwasserablauf.

Vorrichtungen der vorgenannten Art sind vielfach bekannt. Bspw. beschreibt die DE 42 37 201 A1 eine Regenwasserauffangvorrichtung. Diese besitzt ein Gehäuse, in dem eine Regenwassersammeleinrichtung und eine Schmutzelemente des Regenwassers filternde Siebeinrichtung vorgesehen sind, wobei das Gehäuse an einer Oberseite einen Eintrittsstutzen und einer Unterseite einen Austrittsstutzen für die Verbindung mit je einem Regenfallrohr aufweist. In dem Gehäuse ist eine Auffangwanne vorgesehen, deren Auffangöffnung im Abstand unterhalb des Eintrittsstutzens und im wesentlichen zentral zur Verlängerung der Fallachse des Eintrittsstutzens angeordnet und dem Eintrittsstutzen entgegengerichtet ist, und die eine seitlich aus dem Gehäuse führende Ableiteinrichtung für das Regenwasser aufweist. Die Siebeinrichtung ist im Bereich der Auffangöffnung der Auffangwanne in Schräglage angeordnet.

Das Dokument DE 198 47 485 A1 beschreibt einen Filter zum Einsatz in der Brauchwasserversorgung. Der Filter dient zur Reinigung von Dachablauf- und Zisternenwasser, um es nachfolgend für verschiedene Anwendungen, wie WC, Waschmaschine und Garten verwenden zu können. Der Filter kann je nach angeschlossenem Entwässerungssystem wahlweise als selbstreinigender Filter mit Schmutzweitenspülung oder als sammelnde Filterung mit Schmutzrückhaltung verwendet werden kann. Wird er als sammelnder Filter eingesetzt, ist er sehr einfach zu reinigen. Wird er als selbstreinigender Filter eingesetzt, hat er einen sehr geringen Höhenversatz. Zudem kann der Filter gleichzeitig Oberflächenschmutz aus dem Zisternenwasser entfernen und Gerüche aus dem Entwässerungssystem verhindern. Der Filter besteht aus einem höhenverstellbaren Sieb, welches die beiden Stellungen schmutzrückhaltend und schmutzsammelnd ermöglicht. Ein am Filter angebrachter Kanal mit Überlaufkanten bewirkt bei hohem Wasserstand ein Überlaufen und damit verbundenes Wegspülen des Oberflächenwassers mit seinen schwimmenden Schmutzpartikeln. An diesem Kanal kann gleichzeitig der Siphon gegen Gerüche aus der Entwässerungseinrichtung angebracht sein.

Ein weiteres Dokument, DE 198 07 068 A1 betrifft einen Regenwasserfilter für strömendes Wasser mit einem Zulauf, einem Filterwasserablauf und einem Schmutzwasserablauf, wobei zwischen dem Zulauf und dem Filterwasserablauf eine Siebkammer mit einem Sieb vorgesehen ist. Gute Trenneigenschaften bei einem sehr geringen Höhenversatz zwischen Zulauf und Filterwasserablauf werden erreicht, indem in der Siebkammer die Strömungsrichtung im wesentlichen horizontal seitlich abgelenkt wird und an der von dem Regenwasser angeströmten Außenseite der Siebkammer ein Sieb vorgesehen ist.

Aus dem dem Anmeldungsgegenstand am nächsten stehenden Dokument DE 196 50 023 A1 ist ein selbstreinigender Filter zum Einbau vor oder in einem Sammelbehälter, insbesondere Regenwasserspeicher bekannt. Unter dem Regenwasserzulauf der Vorrichtung ist ein Sieb angeordnet. Das Sieb ist mit schüsselähnlichem Rand kippbar ausgebildet. Sobald sich das Sieb durch Schmutz zusetzt, steigt das Wasser oberhalb des Siebes an, bis das Gewicht des Wassers das Sieb zum Umkippen bringt. In diesem Fall fließt gereinigtes Wasser in den Speicher unterhalb des Siebes zurück und reinigt zusätzlich durch das Rückspülen die Siebfläche. Ist die Siebfläche gereinigt, kippt sie infolge anderer Gewichtsbelastung in die Ausgangslage zurück.

Ausgehend vom vorgenannten Stand der Technik liegt der Erfindung die Aufgabe zugrunde, eine Vorrichtung zum Reinigen eines Mehrphasen-Gemisches von insbesondere Dachablauf- und/oder Zisternen-Rohwasser zur mindestens teilweisen Alimentation von Brauchwasser-Verbrauchern anzugeben, die sich für ein breites Einsatzgebiet eignet, dabei hohe Wirkungsgrade bei geringer Baugröße erzielt und mit möglichst geringen Kosten herstellbar und betreibbar ist.

Zur Lösung der Aufgabe wird bei einer Vorrichtung der im Oberbegriff von Anspruch 1 genannten Art mit der Erfindung vorgeschlagen, dass sich entgegen der Fließrichtung hinter dem unteren Bereich des Siebes eine Drosselstufe mit einem Staurand befindet, der so höheneinstellbar ist, dass er adhäsionsbedingtes Anhaften von Feststoff an der Siebfläche verhindert, dass sich an das Sieb in Fließrichtung ein flaches Sammelbecken anschließt, und dass das Sammelbecken mit einer - auf den Boden bezogen - konkav-konvexen Strömungsstufe in den Rohwasserablauf einmündet.

Die erfindungsgemäße Vorrichtung eignet sich optimal für einen Direkteinbau in bestehende Leitungsverläufe mit sehr geringem Höhenverlust, z.B. bei der Regenwassernutzung. Es handelt sich dabei um ein wartungsarmes, weil selbstreinigendes Gerät zur Trennung von Mehrphasen-Gemischen. Durch geringe Baugröße und einfachen Aufbau ergeben sich darüber hinaus geringe Fertigungs- und Montagekosten. Darüber hinaus ist der Wirkungsgrad bei der Schmutzwasserreinigung sehr hoch und beträgt bei durchschnittlichen Anlagen zwischen 92 % und 98 % der sammelbaren Wasservolumen.

Vorteilhafte Ausgestaltungen der Erfindung sind entsprechend den Unteransprüchen vorgesehen.

Dabei sieht eine funktionswesentliche Ausbildung vor, dass das Sieb einen mit in Fließrichtung ausgerichteten Durchlaßspalten ausgebildeten Siebrost besitzt. Dieser ergibt einen hohen Wirkungsgrad der Abscheidung und verhindert ein Zusetzen der Filteröffnungen infolge der in gleicher Richtung mit dem Siebrost darüber strömenden Schmutzwassermengen.

Dieser Effekt kann weiterhin auch noch dadurch unterstützt werden, dass das Sieb im unteren Bereich mit einer Drossel ausgebildet ist und dort senkrecht nach unten abknicken kann.

Dabei verhindert die Drossel durch einen von ihr verursachten Aufbau von Wasserdruck von hinten gegen die Filterspalten ein Festsetzen bzw. adhäsionsbedingtes Anhaften von Feststoffen an der Filterfläche. Damit nach Beendigung des Zulaufes kein Mehrphasen-Gemisch im Gerät verbleibt, ist weiter in der Drosselstufe ein Durchlaß integriert, der restliches Fluid abführt.

Bei Zuflüssen, welche die Kapazität der Filterfläche übersteigen, werden Feststoffe mit einem Teil des Mehrphasen-Gemisches über den Ablauf in geringer Höhe unterhalb der Horizontalen mit Hilfe der Selbstreinigung ausgetragen.

Weiterhin sieht die Erfindung eine Ausgestaltung der Vorrichtung vor, wonach die Strömungsstufe zur Erzeugung eines als Fließwechsel bezeichneten walzenförmigen Strömungswirbels in Rotation um eine horizontale, zur Fließrichtung quer gerichtete Achse mit einem konkav-konvexen Bodenprofil ausgebildet ist.

Der Fließwechsel in der Vorrichtung wird dazu genutzt, um auf rein physikalischem Wege insbesondere durch die Zentrifugalkräfte der rotierenden Strömungswalze eine Trennung des Mehrphasen-Gemisches zu erreichen.

Dabei besitzt die selbstreinigende Wirkung des Gerätes die Fähigkeit, an dessen Bodenbereich abgelagerte Schmutzpartikel aufzuwirbeln und über den Ablauf aus der Vorrichtung auszutragen. Damit erweist sich, dass die Selbstreinigung der Vorrichtung durch die Entstehung des Fließwechsels im Austragsbereich einen wesentlichen, positiven Einfluß auf die Funktion und insbesondere das Selbstreinigungsverhalten der Vorrichtung ausübt.

Durch die erfindungsgemäße Ausbildung wird auch erreicht, dass die Vorrichtung für wechselnde Arbeitsweisen nach Maßgabe des Zuflusses gemessen in m³ pro Stunde unterhalb einer vorgebbaren Menge einerseits als sammelndes Gerät, und oberhalb derselben andererseits als selbstreinigendes Gerät ausgebildet ist.

Eine weitere wesentliche Ausgestaltung der Vorrichtung ist dadurch gekennzeichnet, dass der Zulauf des Mehrphasen-Gemisches als eine stetig verlaufende Beruhigungsstufe mit einem Neigungswinkel zur Horizontalen ausgebildet ist oder strömungsgünstig gebogen ist.

Dabei ist vorgesehen, dass dem Rohwasser-Ablauf am Ende der Strömungsstufe eine Überlaufschwelle für überschüssiges Mehrphasen-Gemisch mit einer Höhendifferenz relativ zum Zulauf zugeordnet ist.

Die Längenverhältnisse der Bauteile der Vorrichtung zueinander sind vorzugsweise so gestaltet, dass in etwa für das Sieb eine Längeneinheit, für das Sammelbekken eine weitere Längeneinheit, und für die Strömungsstufe zwei Längeneinheiten vorgesehen sind.

Für eine ungehinderte Ausbildung des walzenförmigen Strömungswirbels können die Seitenwände erfindungsgemäß gegen die Senkrechte geneigt sein. Und schließlich sieht die vorteilhafte Konstruktion der Vorrichtung vor, dass sich unterhalb des Durchlauffilters und des Sammelbeckens ein Sammelraum mit einem Brauchwaser-Ablauf befindet.

Weitere Einzelheiten, Merkmale und Vorteile der Erfindung ergeben sich aus der nachstehenden Erläuterung eines in den Zeichnungen schematisch dargestellten Ausführungsbeispieles. Es zeigen:

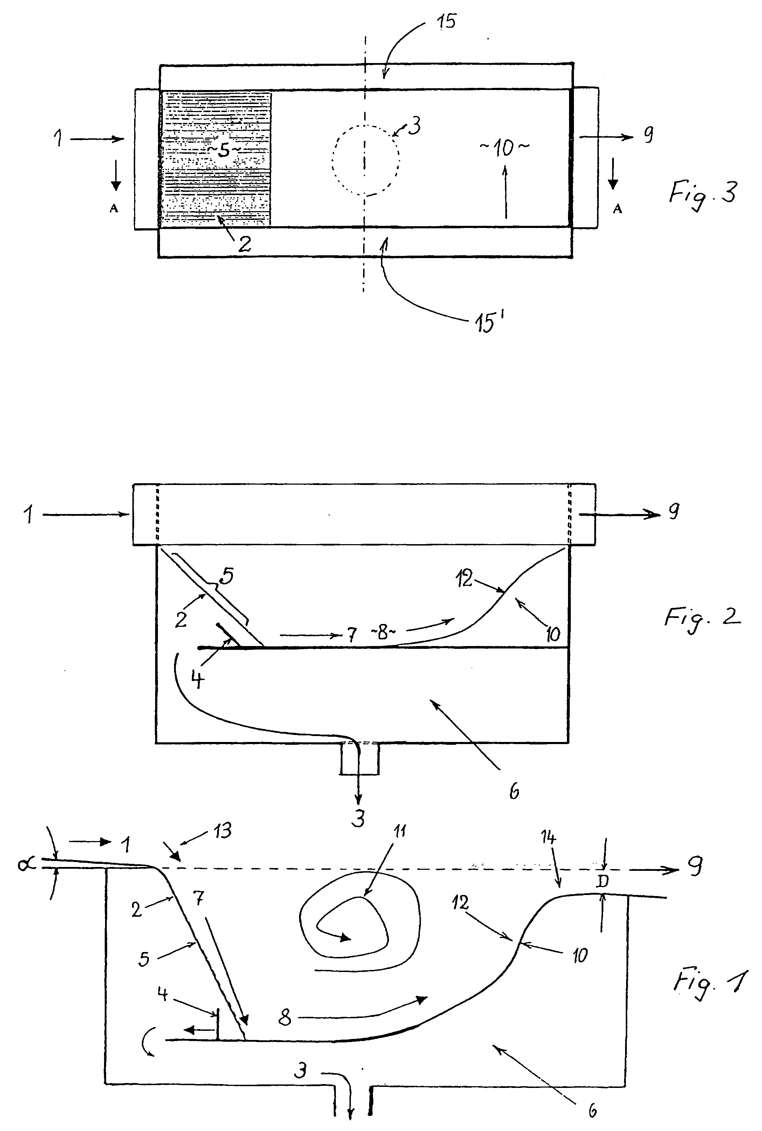

- Figur 1: mit abgenommener seitlicher Verkleidung den inneren Aufbau der Vorrichtung, insbesondere bei Entstehung des als Fließwechsel bezeichneten walzenförmigen Strömungswirbels;
- Figur 2: im Schnitt der Ebene A-A in Fig. 3 die Vorrichtung mit Rohwasser-Zulauf, dem Durchlauffilter und dem Verlauf der Brauchwasser-Ablaufströmung;
- Figur 3: die Vorrichtung in Draufsicht.

Bei der Erfindung handelt es sich um ein Gerät zur Trennung von Mehrphasen-Gemischen. Die Vorrichtung ist geeignet zum Reinigen eines Mehrphasen-Gemisches von insbesondere Dachablauf- und/oder Zisternen-Rohwasser zur mindestens teilweisen Alimentation von Brauchwasser-Verbrauchern speziell im Wohnbereich wie Toilettenspülung, Haus- und Hofreinigung, Gartenbewässerung, Autowäsche und dergleichen. Die Vorrichtung ist mit einem Rohwasserzulauf 1, einem Durchlauffilter 2 und einem Brauchwasserablauf 3 sowie mit Mitteln zum Austragen von Schmutzpartikeln versehen.

Der Durchlauf-Filter 2 ist ein schräg unter dem Zulauf 1 in einem Winkel zur Senkrechten von etwa 20° - 70° angeordnetes Sieb. Hinter dem unteren Bereich des Siebes 2 befindet sich eine Drosselstufe mit einem Staurand 4, der so höheneinstellbar ist, dass er adhäsionsbedingtes Anhaften von Feststoffen an der Siebfläche 5 verhindert. An das Sieb 2 schließt sich in Fließrichtung 7 ein flaches Sammelbecken 8 an. Das Sammelbecken 8 mündet mit einer konkav-konvexen Strömungsstufe 10 in den Ablauf 9 ein. Die konkav-konvexe Strömungsstufe kann ein kontinuierlicher Kurvenzug sein oder als Polygonzug ausgebildet sein. Wichtig ist dessen hydraulisch günstiger Verlauf, d. h. es dürfen nur geringe Umlenkungen der Strömung verursacht sein.

Das Sieb 2 besitzt einen mit in Fließrichtung 7 ausgerichteten Durchlaßspalten ausgebildeten Siebrost 5. In der Drossel 4 ist wenigstens ein Durchlauf integriert, derart, dass nach Beendigung des Mehrphasen-Gemisch-Zulaufs 1 kein Rest davon in der Vorrichtung verbleibt. Die Strömungsstufe 10 ist mit dem konkav-konvexen Bodenprofil 12 zur Erzeugung eines als Fließwechsel bezeichneten walzenförmigen Strömungswirbels 11 in Rotation um eine horizontale, zur Fließrichtung quer gerichtete Achse ausgebildet.

Die Vorrichtung kann nach Maßgabe der Größe des Zuflusses unterhalb einer vorgebbaren Marge als sammelndes Gerät und oberhalb derselben als Selbstreinigungsgerät für wechselnde Arbeitsweisen arbeiten. Der Zulauf 1 des Mehrphasen-Gemisches zeigt eine stetig verlaufende Beruhigungsstufe 13 mit einem Neigungswinkel α zur Horizontalen. Der Neigungswinkel kann etwa zwischen 3° und 6° Winkelgrad betragen. Der Zulauf kann auch strömungsgünstig gebogen sein. Dem Rohwasser-Ablauf 9 am Ende der Strömungsstufe 10 ist eine Überlaufschwelle 14 für überschüssiges Mehrphasen-Gemisch mit einer Höhendifferenz "D" relativ zum Zulauf 1 zugeordnet. Die Längenverhältnisse der Elemente der Reinigungsvorrichtung betrugen in etwa für das Sieb 2, eine Einheit, für den Horizontalteil 8 eine weitere Einheit, und für die Strömungsstufe (10) zwei Einheiten. Hieraus ist erkennbar, daß die gesamte Vorrichtung gedrungen gebaut ist.

Für eine ungehinderte Ausbildung des walzenförmigen Strömungswirbels können die Seitenwände 15, 15' gegen die Senkrechte geneigt werden. Unterhalb des Durchlauffilters 2 und des Sammelbeckens 8 befindet sich ein Sammelraum 6 mit einem Brauchwasser-Ablauf 3, der zu einer Sammelzisterne führt. Der Brauchwasser-Ablauf 3 kann seitlich aus dem Sammelraum 6 heraus geführt sein.

Die Erfindung ist unkompliziert, sie eignet sich für ein breites Einsatzgebiet bei einer relativ geringen Baugröße und extrem hohem Wirkungsgrad für sammelbares Wasservolumen und für Schmutzabscheidung aus dem zuströmenden Schmutzwasser und ist mit vergleichsweise geringen Kosten herstellbar und montierbar. Die erfindungsgemäße Reinigungsvorrichtung kann mit Vorteil in Kläranlagen, in Transportanlagen zur Trennung von Feststoff-Wasser-Gemischen bspw. von Kohle-Wasser-Gemischen oder Sand-Wasser-Gemischen eingesetzt werden. Für größere Feststoff-Wassermengen können mehrere Reinigungsvorrichtungen mehrstufig oder kaskadenförmig zusammen geschaltet werden. Insofern löst die Erfindung in optimaler Weise die eingangs gestellte Aufgabe.

### Liste der Bezugszeichen

- 1: Rohwasser-Zulauf
- 2: Durchlauffilter
- 3: Brauchwasser-Ablauf
- 4: Staurand
- 5: Siebfläche
- 6: Sammelraum
- 7: Fließrichtung
- 8: Sammelbecken
- 9: Ablauf
- 10: Strömungsstufe
- 11: Strömungswirbel
- 12: Bodenprofil
- 13: Beruhigungsstufe
- 14: Überlaufschwelle
- 15: Seitenwände

## Patentansprüche

1. Vorrichtung zum Reinigen eines Mehrphasen-Gemisches von insbesondere Dachablauf- und/oder Zisternen-Rohwasser zur mindestens teilweisen Alimentation von Brauchwasser-Verbrauchern speziell im Wohnbereich wie Toilettenspülung, Haus- und Hofreinigung, Gartenbewässerung und Autowäsche, mit einem Rohwasserzulauf (1 ), einem Durchlauffilter (2) und einem Brauchwasserablauf (3), wobei der Durchlauffilter (2) ein unter dem Rohwasserzulauf (1) in Fließrichtung (7) angeordnetes Sieb (2) mit einer Siebfläche (5) ist,
**dadurch gekennzeichnet,**
- **dass** sich entgegen der Fließrichtung (7) hinter dem unteren Bereich des Siebes (2) eine Drosselstufe mit einem Staurand (4) befindet, der so höheneinstellbar ist, dass er adhäsionsbedingtes Anhaften von Feststoff an der Siebfläche (5) verhindert,
- **dass** sich an das Sieb (2) in Fließrichtung (7) ein flaches Sammelbekken (8) anschließt, und
- **dass** das Sammelbecken (8) mit einer konkav-konvexen Strömungsstufe (10) in den Rohwasserablauf (9) einmündet.

2. Vorrichtung nach Anspruch 1,
**dadurch gekennzeichnet,**
**dass** das Sieb (2) einen mit in Fließrichtung (7) ausgerichteten Durchlaßspalt ausgebildeten Siebrost (5) besitzt.

3. Vorrichtung nach Anspruch 1 oder 2,
**dadurch gekennzeichnet,**
**dass** in der Drosseistufe mit Staurand (4) wenigstens ein Durchlaß integriert ist, derart, dass nach Beendigung des Mehrphasen-Gemisch-Zulaufs (1) kein Rest des Mehrphasen-Gemisches in der Vorrichtung verbleibt.

4. Vorrichtung nach einem oder mehreren der Ansprüche 1 bis 3,
**dadurch gekennzeichnet,**
**dass** die Strömungsstufe (10) mit dem konkav-konvexen Bodenprofil (12) zur Erzeugung eines als Fließwechsel bezeichneten walzenförmigen Strömungswirbels (11) in Rotation um eine horizontale, zur Fließrichtung quer gerichtete Achse ausgebildet ist.

5. Vorrichtung nach einem oder mehreren der Ansprüche 1 bis 4,
**dadurch gekennzeichnet,**
**dass** die Vorrichtung für wechselnde Arbeitsweisen nach Maßgabe der Menge des Zuflusses gemessen in m³ pro Stunde einerseits unterhalb einer vorgebbaren Menge als sammelndes Gerät, und andererseits oberhalb derselben als selbstreinigendes Gerät ausgebildet ist.

6. Vorrichtung nach einem oder mehreren der Ansprüche 1 bis 5,
**dadurch gekennzeichnet,**
**dass** der Rohwasserzulauf (1) des Mehrphasen-Gemisches als eine stetig verlaufende Beruhigungsstufe (13) mit einem Neigungswinkel (α) zur Horizontalen ausgebildet ist, oder strömungsgünstig gebogen ist.

7. Vorrichtung nach einem oder mehreren der Ansprüche 1 bis 6,
**dadurch gekennzeichnet,**
**dass** dem Rohwasser-Ablauf (9) am Ende der Strömungsstufe (10) eine Überlaufschwelle (14) für überschüssiges Mehrphasen-Gemisch mit einer Höhendifferenz "D" relativ zum Zulauf (1) zugeordnet ist.

8. Vorrichtung nach einem oder mehreren der Ansprüche 1 bis 7,
**dadurch gekennzeichnet,**
**dass** die Längenverhältnisse in etwa für das Sieb (2, 5) eine Längeneinheit, für das Sammelbecken (8) eine Längeneinheit, und für die Strömungsstufe (10) zwei Längeneinheiten ausmachen.

9. Vorrichtung nach einem oder mehreren der Ansprüche 1 bis 8,
**dadurch gekennzeichnet,**
**dass** für eine ungehinderte Ausbildung des walzenförmigen Strömungswirbels Seitenwände (15, 15') der Vorrichtung vorzugsweise gegen die Senkrechte geneigt sind.

10. Vorrichtung nach einem oder mehreren der Ansprüche 1 bis 9,
**dadurch gekennzeichnet,**
**dass** sich unterhalb des Durchlauffilters (2) und des Sammelbeckens (8) ein Sammelraum (6) mit einem Brauchwasser-Abfauf (3) befindet.

11. Vorrichtung nach einem oder mehreren der Ansprüche 1 bis 10,
**dadurch gekennzeichnet,**
**daß** das Sieb (2) in einem Winkel zur Senkrechten angeordnet ist.

12. Vorrichtung nach Anspruch 11,
**dadurch gekennzeichnet,**
**daß** der Winkel des Siebes (2) bis 70°, vorzugsweise etwa 20° bis 70° beträgt.

## Claims

1. A device for cleaning a multiple phase mixture of raw water, in particular from roofs and/or cisterns, for the at least partial supply of service water consumers, more specifically in domestic applications such as toilet flushing, yard and house cleaning, garden watering and car wash, said device having a raw water inlet (1), a flow through type filter (2) and a service water outlet (3), said flow through type filter (2) being a sieve (2) with a sieve surface area (5) that is disposed beneath the raw water inlet (1) in the flow direction (7),
**characterized in**
- **that**, behind the lower region of the sieve (2) in the direction opposite to the flow direction (7), there is a flow control stage with a sharp-edged border (4) that is height-adjustable so as to prevent solid matter from bonding to the sieve surface area (5) as a result of adherence,
- **that** the sieve (2) is adjoined in the flow direction (7) with a flat collecting basin (8) and
- **that** the collecting basin (8) discharges into the raw water outlet (9) at a concave-convex flow stage (10).

2. The device according to claim 1,
**characterized in**
**that** the sieve (2) has a sieve grid work (5) configured to have a passage gap oriented in the flow direction (7).

3. The device according to claim 1 or 2,
**characterized in**
**that** at least one passage is integrated within the flow control stage with sharp-edged border (4) in such a manner that, once admission (1) of the multiple phase mixture is completed, no residual multiple phase mixture remains in the device.

4. The device according to one or more of the claims 1 through 3,
**characterized in**
**that** the flow stage (10) with the concave-convex bottom profile (12) is configured to rotate about a horizontal axis which is oriented transversely to the flow direction for generating a cylindrical flow eddy (11) termed a change in flow.

5. The device according to one or more of the claims 1 through 4,
**characterized in**
**that**, for operation in alternate modes, the device is configured to be, depending on the amount of inflow measured in cubic meter per hour, a collecting apparatus when the amount is less than a dictatable amount on the one side and a self-cleaning apparatus when the amount is in excess of the same on the other side.

6. The device according to one or more of the claims 1 through 5,
**characterized in**
**that** the raw water inlet (1) of the multiple phase mixture is configured to be a continuously oriented smoothing stage (13) inclined at an angle (α) from the horizontal plane or is bent so as to allow for convenient flow.

7. The device according to one or more of the claims 1 through 6,
**characterized in**
**that** a spillway (14) for surplus multiple phase mixture is associated with the raw water outlet (9) at the end of the flow stage (10), said spillway having, with respect to the inlet (1), a difference in height "D".

8. The device according to one or more of the claims 1 through 7,
**characterized in**
**that** the length relationship is about one unit length for the sieve (2, 5), one unit length for the collecting basin (8) and two units length for the flow stage (10).

9. The device according to one or more of the claims 1 through 8,
**characterized in**
**that** side walls (15 , 15') of the device are preferably inclined from the vertical plane for unhindered formation of the cylindrical flow eddy.

10. The device according to one or more of the claims 1 through 9,
**characterized in**
**that** a collecting space (6) with a service water outlet (3) is located beneath the flow through type filter (2) and the collecting basin (8).

11. The device according to one or more of the claims 1 through 10,
**characterized in**
**that** the sieve (2) is disposed at an angle to the vertical.

12. The device according to claim 11,
**characterized in**
**that** the angle of the sieve (2) is up to 70°, and preferably ranges from about 20° to 70°.

## Revendications

1. Dispositif d'épuration d'un mélange présentant plusieurs phases et composé notamment des eaux brutes de toiture et/ou de citerne pour l'alimentation du moins partielle de consommateurs des eaux notamment à usage domestique dans des applications telles que la chasse d'eau des toilettes, le nettoyage de la maison et de la cour, l'arrosage du jardin et le lavage de voiture, du type comportant une arrivée des eaux brutes (1), un filtre à filtration continue (2) et une sortie des eaux (3), le filtre à filtration continue (2) étant un tamis (2) avec une surface (5) de tamis disposé en dessous de l'arrivée des eaux brutes (1) par rapport à la direction de l'écoulement (7),
**caractérisé en ce**
- **qu'**un étage d'étranglement avec un bord (4) destiné à contenir les eaux se situe derrière la partie inférieure du tamis (2) dans la direction opposée à la direction de l'écoulement (7), ledit bord étant réglable en hauteur de manière à empêcher la matière solide de rester attachée à la surface (5) du tamis en raison de l'adhérence,
- **qu'**un bassin collecteur (8) plat est situé dans le prolongement du filtre (2) dans la direction de l'écoulement (7) et
- **que** le bassin collecteur (8) débouche dans la sortie (9) des eaux brutes à un étage d'écoulement (10) concave-convexe.

2. Dispositif selon la revendication 1,
**caractérisé en ce**
**que** le tamis (2) possède une grille (5) conformée pour avoir une fente de passage orientée dans la direction de l'écoulement (7).

3. Dispositif selon la revendication 1 ou 2,
**caractérisé en ce**
**qu'**au moins un passage est intégré dans l'étage d'étranglement avec bord (4) destiné à contenir les eaux de manière à ce que, une fois l'arrivée (1) du mélange présentant plusieurs phases terminée, il ne reste plus dans le dispositif de mélange résiduel présentant plusieurs phases.

4. Dispositif selon une ou plusieurs des revendications 1 à 3,
**caractérisé en ce**
**que** l'étage d'étranglement (10) au profil de fond (12) concave-convexe est conformé mobile en rotation autour d'un axe horizontal orienté transversalement à la direction de l'écoulement pour créer un tourbillon cylindrique (11 ) appelé changement d'écoulement.

5. Dispositif selon une ou plusieurs des revendications 1 à 4,
**caractérisé en ce**
**que**, pour des modes de fonctionnement alternés, le dispositif est conformé pour faire office, en fonction de la quantité d'eau amenée mesurée en m³ par heure, d'appareil collecteur d'une part lorsque la quantité d'eau amenée est inférieure à une quantité qu'il est possible d'imposer et d'appareil auto-nettoyant d'autre part lorsque la quantité d'eau amenée est supérieure à celle-ci.

6. Dispositif selon une ou plusieurs des revendications 1 à 5,
**caractérisé en ce**
**que** l'amenée des eaux brutes (1) du mélange présentant plusieurs phases est conformée sous forme d'étage de tranquillisation (13) au contour continu et incliné d'un angle (α) par rapport à l'horizontale ou présente une courbe propice à l'écoulement.

7. Dispositif selon une ou plusieurs des revendications 1 à 6,
**caractérisé en ce**
**qu'**un seuil de trop-plein (14) pour le mélange présentant plusieurs phases excédentaire est associé à la sortie des eaux brutes (9) à l'extrémité de l'étage d'écoulement (10), ce seuil de trop-plein présentant une différence de hauteur « D » par rapport à l'arrivée (1).

8. Dispositif selon une ou plusieurs des revendications 1 à 7,
**caractérisé en ce**
**que** le rapport des longueurs est d'environ une unité de longueur pour le tamis (2, 5), une unité de longueur pour le bassin collecteur (8) et deux unités de longueur pour l'étage d'écoulement (10).

9. Dispositif selon une ou plusieurs des revendications 1 à 8,
**caractérisé en ce**
**que** des parois latérales (15, 15') du dispositif sont de préférence inclinées par rapport à la verticale, permettant ainsi la libre formation du tourbillon cylindrique.

10. Dispositif selon une ou plusieurs des revendications 1 à 9,
**caractérisé en ce**
**qu'**un espace collecteur (6) muni d'une sortie (3) des eaux se situe en dessous du filtre à filtration continue (2) et du bassin collecteur (8).

11. Dispositif selon une ou plusieurs des revendications 1 à 10,
**caractérisé en ce**
**que** le tamis (2) est disposé de manière à former un angle par rapport à la verticale.

12. Dispositif selon la revendication 11,
**caractérisé en ce**
**que** l'angle du tamis (2) est de 70° au plus et est de préférence compris entre environ 20° et 70°.
